# EUROPEAN PATENT APPLICATION

(11) **EP 3 243 977 A2**
(43) Date of publication of application: **15.11.2017**
(21) Application number: 16188042.2
(22) Date of filing: 09.09.2016
(51) Int. Cl.: E04F 15/02, E04F 13/08

(54) **HARD FLOORING OR WALL PANEL PLANK**

(30) Priority: 09.05.2016 CN 201610302151
(71) Applicant: Zhejiang Tianzhen Bamboo & Wood Development Co. Ltd., Huzhou, Zhejiang 313300 (CN)
(72) Inventor: Fang, Qinghua, Anji County, Zhejiang 313300 (CN); Wang, Yibing, Anji County, Zhejiang 313300 (CN)
(74) Representative: Loo, Chi Ching

(57) **Abstract**

The present invention provides a hard flooring or wall panel plank. The hard flooring or wall panel plank includes a flooring or wall panel plank body (1), a retractable bonding element (2) having a first surface and a second surface opposing the first surface, and a release paper layer (3), a surface of the flooring or wall panel plank body (1) is bonded with the first surface of a retractable bonding element (2), the second surface of the retractable bonding elements (2) is bonded with a release paper layer (3).

## Description

### BACKGROUND OF THE INVENTION

### Field of the Invention

The present invention relates to a hard flooring plank and a wall panel plank.

### Description of the Related Art

There are various types of flooring at present, including polyvinyl chloride (PVC) flooring, wood plastic flooring, PVC composite flooring, solid wood flooring, laminate flooring and so on. The flooring planks jointing these floorings are roughly in two types: one refers to flexible flooring planks, such as a thin PVC flooring plank and an artificial leather flooring plank, which are called as resilient flooring planks; and the other refers to anti-flexible flooring planks, such as a solid wood flooring plank, a thick PVC flooring plank and the like, which are called as hard flooring planks.

The resilient flooring planks cannot be connected through joint structures (including a click lock and Tongue & Groove) arranged on side surfaces while being laid and are generally firmly bonded on a ground by brushing glue (i.e. back glue) on back surfaces. Due to the bending resistance, the hard flooring planks cannot be bonded to the ground and thus are connected to be a whole by joint structures disposed on the opposite sides of the flooring planks without back glue bonding. Both the resilient flooring planks and the hard flooring planks have advantages but also have tremendous disadvantages.

The resilient flooring plank has a low cost and is relatively simple for laying, but requires both good flatness of the ground and full coverage of a glue layer while being laid, which needs a high usage amount of glue and tremendously contaminates the construction site. Moreover, the resilient flooring is inappropriate to disassemble and replace after the glue is solidified, and the resilient flooring has weak resilience and provides a hard foot feel when people walk thereon and also has a poor sound insulation effect.

The hard flooring plank has relatively better resilience, provides a better foot feel and can be dissembled. However, when being laid, a keel needs to be assembled on the ground at first, then a subfloor is arranged on the keel, and finally, the hard flooring planks are laid on the subfloor, which needs more auxiliary materials, thus increasing the material cost, construction cost, and construction difficulty. The hard flooring planks further need to be clasped by the joint structures on the side surfaces thereof, so that each hard flooring plank can be connected to be a whole in order to prevent gaps between the hard flooring planks in use caused by displacement. To connect the hard flooring planks firmly, the joint structures cannot be too small, and the height of a protruding edge (or the depth of a groove) of a lap joint should be no less than 3 mm (3-5 mm in general). Since the joint structure is large and the overlapped size of the lapped joint between the hard flooring planks is large, the actual utilization rate of the hard flooring plank is reduced. Furthermore, since the hard flooring planks are suspended above the ground, creaks are unavoidable over time when people walk on the flooring. Particularly, since the joint structures of the hard flooring planks are still monopolized by foreign patents currently, the Chinese flooring enterprises producing these kinds of locks have to pay hundreds of millions of huge patent royalties every year, and these fees are finally borne by consumers, thus greatly increasing the cost of the flooring. Chinese Patent Publication Number CN1656291, entitled "Mechanical Locking System for Flooring Plank" and published on August 17, 2005 and Chinese Patent Publication Number CN1880703, entitled "Flooring Consisting of Hard Flooring Planks and Method for Manufacturing Such Flooring Planks" and published on December 20, 2006 disclose specific lapped joint structures between the hard flooring planks.

### BRIEF SUMMARY OF THE INVENTION

A technical problem to be solved by the present invention is to provide a hard bonding flooring or wall panel plank that can be assembled and disassembled quickly, which not only overcomes the disadvantages of an existing hard flooring plank, but also has the advantages of a soft flooring plank, so that a new breakthrough on the structure of the flooring plank is achieved.

According to one aspect of the present invention, the present invention provides a hard flooring or wall panel plank including a flooring or wall panel plank body, a retractable bonding element having a first surface and a second surface opposing the first surface, and a release paper layer, wherein a surface of the flooring or wall panel plank body is bonded with the first surface of a retractable bonding element, and the second surface of the retractable bonding element is bonded with a release paper layer.

In one embodiment of the present invention, the retractable bonding element may include a plurality of retractable bonding element portions scattered on the surface of the flooring or wall panel plank body.

In one embodiment of the present invention, the plurality of retractable bonding element portions may be uniformly distributed on the surface of the flooring or wall panel plank body.

In one embodiment of the present invention, the retractable bonding element may have a retractable element and glue layers disposed or coated on both an upper or first surface and a lower or second surface of the retractable element, and the retractable element may be a spring, a rubber sheet, a cork sheet, an elastic plastic sheet, a non-woven fabric, a foaming body, or a sponge body.

In one embodiment of the present invention, the retractable bonding element may be a solid self-adhesive.

In one embodiment of the present invention, the release paper layers may be bonded to each retractable bonding element portion to form a full layer of the release paper layer.

In one embodiment of the present invention, the release paper layer may include a plurality of release paper layer portions bonded to the respective retractable bonding element portions.

In one embodiment of the present invention, each retractable bonding element portion may be in the shape of dot, column, or rectangle.

In one embodiment of the present invention, each retractable bonding element portion may be as wide as the flooring or wall panel plank body in a transverse direction of the flooring or wall panel plank body.

In one embodiment of the present invention, the retractable bonding element may have a solid self-adhesive bonded with the whole surface or substantial portion of the surface of the flooring or wall panel plank body, or have a rubber sheet or an elastic plastic sheet bonded with the whole surface or substantial portion of the surface of the flooring or wall panel plank body and glue layers coated on both a first surface and a second surface of the rubber sheet or the elastic plastic sheet.

In one embodiment of the present invention, two opposite sides of the flooring or wall panel plank body may be formed with a micro-jointing structure for connecting with a respective side edge of an adjacent flooring or wall panel plank.

In one embodiment of the present invention, the micro-jointing structure may be formed by a protruding edge arranged at one side of the flooring or wall panel plank body and a groove arranged at an opposite side of the flooring or wall panel plank body for connecting with the protruding edge of the adjacent flooring or wall panel plank body, and the protruding length of the protruding edge may be greater than or equal to 0.1 mm and less than 3 mm.

In one embodiment of the present invention, a protruding height of the protruding edge may be greater than or equal to 0.5 mm and less than or equal to 2.9 mm.

In one embodiment of the present invention, a height of the retractable bonding element may be 1.5 mm to 10 mm.

In one embodiment of the present invention, the flooring or wall panel plank body may be a polyvinyl chloride (PVC) plank, a wood plastic composite plank, a PVC composite plank, a wood plastic composite plank, or a solid wood plank, and has a thickness greater than 3 mm.

According to another aspect of the present invention, the present invention provides a wall panel plank including a wall panel plank body, an inner side surface of the wall panel plank body is bonded with a retractable bonding element, and the other side surface of the retractable bonding element is bonded with a release paper layer.

In one embodiment of the present invention, the retractable bonding element may be a solid self-adhesive bonded with the whole inner side surface or most of the inner side surface of the wall panel plank, or a rubber sheet or an elastic plastic sheet bonded with the whole inner side surface or most of the inner side surface of the wall panel plank body and having glue layers coated on both two side surfaces.

Compared with the prior art, the present invention has the following beneficial effect. The foregoing technical solution is employed, that is the surface of the flooring or wall panel plank body is bonded with the retractable bonding element and the second surface of the retractable bonding element is bonded with the release paper layer. Via this kind of structure, since the retractable bonding element has adherence and resilience, when the flooring or wall panel plank is laid, the flooring or wall of the present invention can be directly bonded to the ground or bare wall. Thus, the hard flooring or wall panel plank can have the advantages of the resilient flooring plank, thereby greatly increasing the laying efficiency of the hard flooring plank and reducing the laying difficulty and the laying cost of the hard flooring plank; moreover, the full coverage of the glue layer is not needed, no floor or wall glue is needed to be coated and brushed on the construction site so that no contamination is caused. The flooring or wall panels is very convenient to disassemble and replace. If any flooring or wall panel planks in the middle are damaged and need to be changed, the damaged flooring or wall panels can be directly taken off and replaced. The flooring or wall panels are flexible and provide good tactile or haptic feedback when people walk or touch thereon, without making any noises. The gaps between the flooring planks and the ground or the gaps between the wall panels planks and the bare wall therebehind not only maintain the ventilation of air but also produce an air sound insulation effect. Since the retractable bonding element has a retractable function, the retractable bonding element may be compressed to deform under the action of pressure and may rebound after the pressure is reduced or removed, thereby self adjusting the flatness and reducing the requirement on the flatness of the ground or wall, which further reduces the use cost. Because the hard flooring or wall panel plank of the present invention is bonded to the ground or bare wall which is sufficient to prevent gaps between the planks caused by displacement, the joint structures of the opposite side surfaces required by the conventional hard flooring plank are saved in this way, and overlapped structures at the lapped joints between the conventional hard flooring planks are omitted, so that the processing cost is further reduced compared to that of the conventional hard flooring planks, and the utilization rate of the hard flooring or wall panel planks is improved. The release paper layer is provided to facilitate transferring and stacking the hard flooring or wall panel planks, and the hard flooring or wall panel planks can be bonded to any place by tearing off the release paper layer during use.

The present invention has further beneficial effects. Each retractable bonding element is as wide as the flooring or wall panel plank body in the transverse direction of the flooring or wall panel plank body. Such structure is more beneficial for increasing the stability of the flooring or wall panel plank.

The present invention has further beneficial effects. Because the hard flooring or wall panel plank of the prevent invention is bonded to the ground or wall which is sufficient to prevent gaps between the planks caused by displacement, it is possible to employ the micro-jointing structure with a size less than that of the existing joint structure. Employing the micro-jointing structure may further increase the whole connecting effect among various hard flooring or wall panel planks and improve the whole flatness of the flooring or wall paneling. Although the micro-jointing structure is provided, the size thereof is smaller than that of the existing joint structure while being compared with the joint structure of the hard flooring plank in the prior art; moreover, the overlapped size at the lapped joint between the hard or wall panel flooring planks is smaller, and the utilization rate of the hard flooring or wall panel plank is increased; in addition, it is very convenient to clasp, so that the technical difficulty of installation is greatly decreased, and the processing and installation costs are greatly reduced. As an optimization, the micro-jointing structure is formed by the protruding edge arranged at one side of the flooring plank body and the groove arranged at the opposite side of the flooring or wall panel plank body for connecting with the protruding edge of the adjacent flooring plank body, and the protruding length of the protruding edge is greater than or equal to 0.1 mm and less than 3 mm. The micro-jointing structure with the protruding edge and the groove which are matched is also called as a micro tongue & groove (T&G) structure. Employing the micro T&G structure makes the structure of the flooring or wall panel plank simpler and is more convenient to joint and install in case of being sufficient to prevent gaps between the hard flooring or wall panel planks caused by displacement, so that the technical difficulty of installation is further decreased, and the processing and installation costs are further reduced.

Compared with the prior art, the size of the micro T&G structure is smaller than that of the prior art, and the overlapped size at the lapped joint between the hard flooring or wall panel planks is smaller; therefore, the utilization rate of the hard flooring or wall panel plank is increased; in addition, since the micro T&G structure has a simple and smaller structure which is very convenient to install, the technical difficulty of installation is greatly decreased, and the processing and installation costs are greatly reduced. The effect is optimal when the protruding height of the protruding edge is greater than or equal to 0.5 mm and less than or equal to 2.9 mm.

### BRIEF DESCRIPTION OF THE DRAWINGS

FIG. 1 is a structural schematic diagram of the present invention;
FIG. 2 is a structural schematic diagram of a retractable bonding element formed by a spring in one embodiment of the present invention;
FIG. 3 is a structural schematic diagram of a retractable bonding element formed by a rubber sheet, a cork sheet, an elastic plastic sheet, a non-woven fabric, a foaming body, or a sponge body in one embodiment of the present invention;
FIG. 4 is a structural schematic diagram of a retractable bonding element formed by a solid self-adhesive in one embodiment of the present invention;
FIG. 5 is a structural schematic diagram of a micro-jointing structure provided in the present invention;
FIG. 6 is a structural schematic diagram of the retractable bonding element uniformly distributed on a bottom surface of a flooring plank body;
FIG. 7 is a structural schematic diagram of laying a flooring or wall panel plank in the present invention on a ground;
FIG. 8 is a structural schematic diagram of a release paper layer disposed on a lower end of each retractable bonding element, respectively; and
FIG. 9 is a structural schematic diagram of the retractable bonding element as wide as the flooring or wall panel plank body in a transverse direction of the flooring or wall panel plank body.

### DETAILED DESCRIPTION OF THE INVENTION

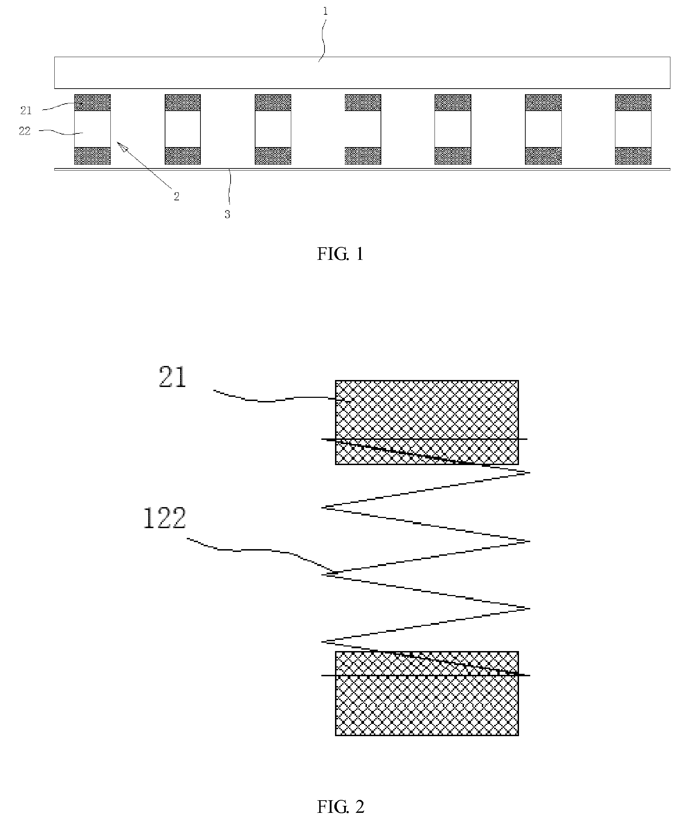

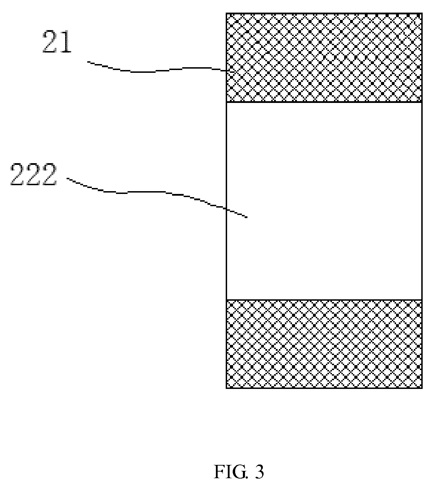

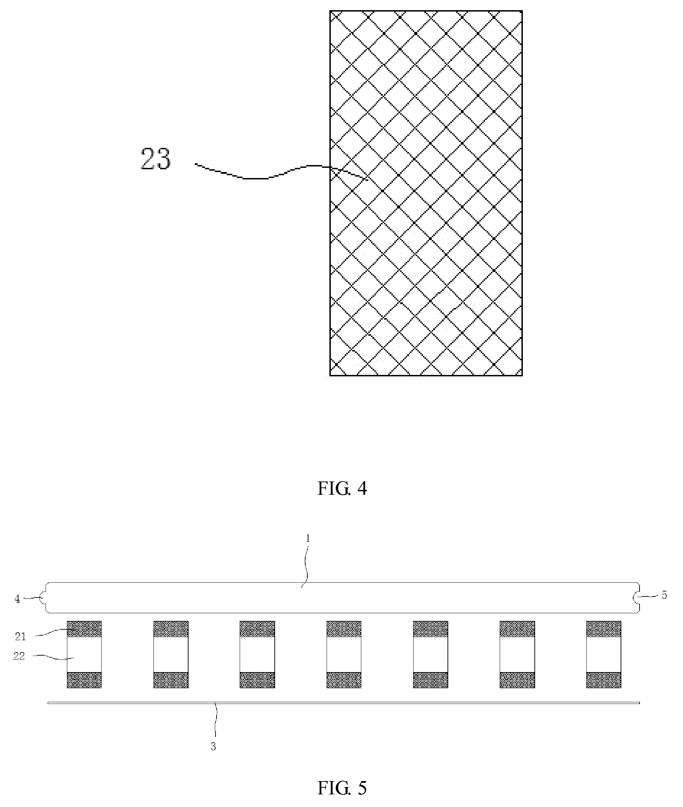

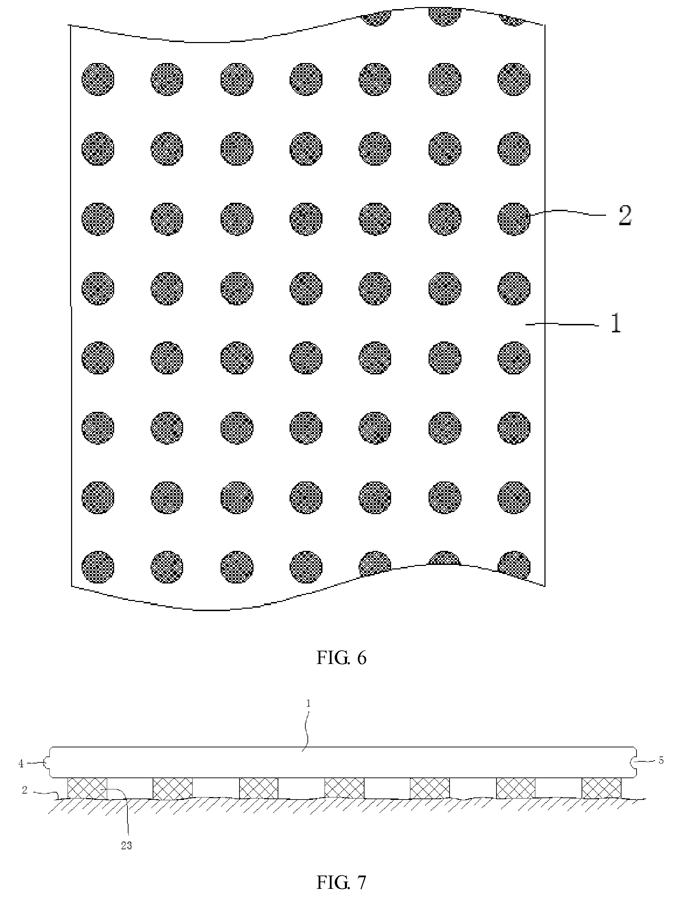

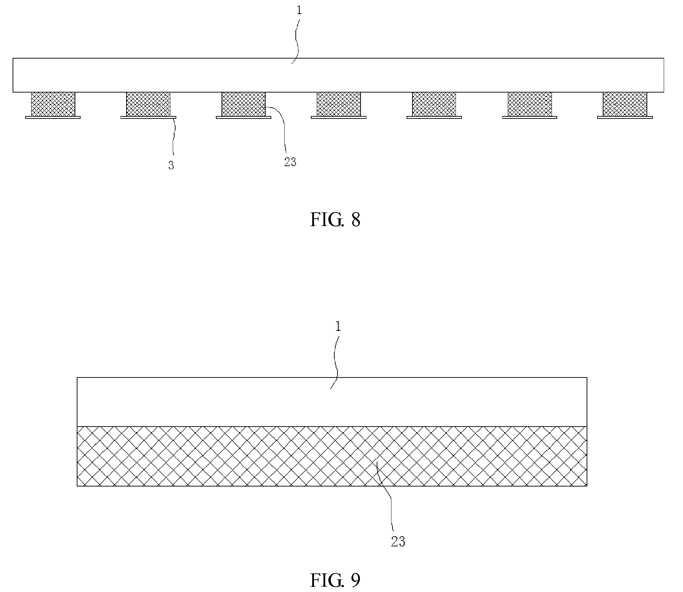

To make the technical solution of the present invention more clearly, the present invention will be described in details hereinafter with reference to FIGs. 1-9. It should be understood that the specific exemplary embodiments described in the description are merely for the purpose of explaining the present invention, but are not intended to limit the protection scope of the present invention.

The present invention relates to a hard flooring or wall panel plank including a flooring or wall panel plank body 1, a surface, preferably a bottom or inner surface, of the flooring or wall panel plank body 1 is bonded with a first surface of a retractable bonding element 2, and the retractable bonding element 2 may include a plurality of retractable bonding element portions scattered on the bottom surface of the flooring or wall panel plank body 1. Certainly, the plurality of retractable bonding element portions may also be uniformly distributed on the bottom surface of the flooring or wall panel plank body 1. A second surface of the retractable bonding element 2 is bonded with a release paper layer 3. The release paper layer 3 may either be a full layer of a release paper layer or a plurality of release paper layer portions only bonded to the second surface of the respective retractable bonding element portions.

As an optimization, the retractable bonding element 2 is a retractable element 22 having glue layers 21 disposed or coated on both upper/first and lower/second surfaces, and the retractable member 22 is a spring 122, a rubber sheet 222, a cork sheet 222, an elastic plastic sheet 222, a non-woven fabric 222, a foaming body 222, or a sponge body 222. The retractable bonding element 2 may also be a solid self-adhesive 23. CR-92006 may be selected as the solid self-adhesive 23; alternatively, solid hot melt glue, such as SD-86331, may also be selected as the retractable bonding element 2. Each retractable bonding element portion is in the shape of dot, column, or rectangle. Each retractable bonding element portion may also be as wide as the flooring or wall panel plank body 1 in a transverse direction of the flooring or wall panel plank body 1. The retractable bonding element 2 may further be a solid self-adhesive bonded with the whole bottom surface or most of the bottom surface of the flooring or wall panel plank body 1, or an elastic plastic sheet 222 bonded with the whole bottom surface or most of the bottom surface of the flooring or wall panel plank body 1 and having glue layers coated on the upper/first and lower/second surfaces thereof, or a rubber sheet 222 bonded with the whole bottom surface or most of the bottom surface of the flooring or wall panel plank body 1 and having glue layers coated on the upper/first and lower/second surfaces thereof.

As an optimization, the two opposite sides of the flooring or wall panel plank body 1 are formed with a micro-jointing structure matched with the side edge of an adjacent flooring or wall panel plank, respectively. The so-called micro-jointing structure refers to a joint structure with a structure same as the existing joint structure but a size less than that of the existing joint structure. As a further preferable solution, the micro-jointing structure refers to a micro tongue & groove (T&G) structure. The micro T&G structure is formed by a protruding edge 4 arranged at one side of the flooring or wall panel plank body 1 and a groove 4 arranged at the opposite side of the flooring or wall panel plank body 1 and matched or connected with the protruding edge 4 of the adjacent flooring or wall panel plank body, and the protruding length of the protruding edge 4 is greater than or equal to 0.1 mm and less than 3 mm. As an optimization, the protruding height of the protruding edge 4 is greater than or equal to 0.5 mm and less than or equal to 2.9 mm, and the best value range is greater than or equal to 0.5 mm and less than or equal to 2.5 mm. The height of the retractable bonding element is 1.5 mm to 10 mm.

The flooring or wall panel plank body 1 is a polyvinyl chloride (PVC) plank or flooring plank, a wood plastic composite plank or flooring plank, a PVC composite plank or flooring plank, a wood plastic composite plank or flooring plank, or a solid wood plank or flooring plank, having a thickness of greater than 3 mm.

The various technical solutions above are adaptive to a flooring plank or a wall panel plank, as already discussed above. As a further optimization for a wall panel plank, each retractable bonding element 2 is a solid self-adhesive bonded with the whole surface or most of the surface of the flooring or wall panel plank body 1, or an elastic plastic sheet bonded with the whole surface or most or substantial portion of the surface of the wall panel plank body 1 and having glue layers coated on both side surfaces thereof, or a rubber sheet bonded with the whole surface or most or substantial portion of the surface of the flooring or wall panel plank body 1 and having glue layers coated on both side surfaces thereof. The beneficial effects of the wall panel plank correspond to that of the hard flooring plank, and will not be elaborated herein.

## Claims

1. A hard flooring or wall panel plank, comprising a flooring or wall panel plank body (1), a retractable bonding element (2) having a first surface and a second surface opposing the first surface, and a release paper layer (3), wherein a surface of the flooring or wall panel plank body (1) is bonded with the first surface of a retractable bonding element (2), and the second surface of the retractable bonding element (2) is bonded with a release paper layer (3).

2. A hard flooring or wall panel plank according to claim 1, wherein the retractable bonding element (2) comprises a plurality of retractable bonding element portions scattered on the surface of the flooring or wall panel plank body (1).

3. A hard flooring or wall panel plank according to claim 2, wherein the plurality of retractable bonding element portions are uniformly distributed on the surface of the flooring or wall panel plank body (1).

4. A hard flooring or wall panel plank according to claim 2 or 3, wherein the retractable bonding element (2) has a retractable element (22) and glue layers (21) disposed or coated on both a first surface and a second surface of the retractable element (22), and the retractable element (22) being a spring (122), a rubber sheet (222), a cork sheet (222), an elastic plastic sheet (222), a non-woven fabric (222), a foaming body (222), or a sponge body (222).

5. A hard flooring or wall panel plank according to claim 2 or 3, wherein the retractable bonding element (2) is a solid self-adhesive (23).

6. A hard flooring or wall panel plank according to claim 2 or 3, wherein the release paper layer (3) is bonded to each retractable bonding element portion to form a full layer of the release paper layer (3).

7. A hard flooring or wall panel plank according to claim 2 or 3, wherein the release paper layer (3) comprises a plurality of release paper layer portions (3) bonded to the respective retractable bonding element portions.

8. A hard flooring or wall panel plank according to claim 2 or 3, wherein each retractable bonding element portion is in the shape of dot, column, or rectangle.

9. The A hard flooring or wall panel plank according to claim 2 or 3, wherein each retractable bonding element portion is as wide as the flooring or wall panel plank body (1) in a transverse direction of the flooring or wall panel plank body (1).

10. A hard flooring or wall panel plank according to claim 1, wherein the retractable bonding element (2) has a solid self-adhesive bonded with the whole surface or substantial portion of the surface of the flooring or wall panel plank body (1), or has a rubber sheet (222) or an elastic plastic sheet (222) bonded with the whole surface or substantial portion of the surface of the flooring or wall panel plank body (1) and glue layers coated on both a first surface and a second surface of the rubber sheet (222) or the elastic plastic sheet (222).

11. A hard flooring or wall panel plank according to any one of claims 1, 2, 3 and 10, wherein two opposite sides of the flooring or wall panel plank body (1) are formed with a micro-jointing structure for connecting with a respective side edge of an adjacent flooring or wall panel plank (1).

12. A hard flooring or wall panel plank according to claim 11, wherein the micro-jointing structure is formed by a protruding edge (4) arranged at one side of the flooring or wall panel plank body (1) and a groove (5) arranged at an opposite side of the flooring or wall panel plank body (1) for connecting with the respective protruding edge (4) of the adjacent flooring or wall panel plank body (1), and a protruding length of the protruding edge (4) is greater than or equal to 0.1 mm and less than 3 mm.

13. A hard flooring or wall panel plank according to claim 12, wherein a protruding height of the protruding edge (4) is greater than or equal to 0.5 mm and less than or equal to 2.9 mm.

14. A hard flooring or wall panel plank according to any one of claims 1, 2, 3 and 10, wherein a height of the retractable bonding element (1) is 1.5 mm to 10 mm.

15. A hard flooring or wall panel plank according to any one of claims 1, 2, 3 and 10, wherein the flooring or wall panel plank body (1) is a polyvinyl chloride (PVC) plank, a wood plastic plank, a PVC composite plank, a wood plastic composite plank, or a solid wood plank, and has a thickness greater than 3 mm.
